# EUROPEAN PATENT SPECIFICATION

(11) **EP 1 883 664 B1**
(45) Date of publication and mention of the grant of the patent: **17.11.2010**
(21) Application number: 06770081.5
(22) Date of filing: 08.05.2006
(51) Int. Cl.: C08G 18/40, C08G 18/48, C08K 5/521, C08J 9/14, C08G 101/00

(54) **HYDROCARBON OR HYDROFLUOROCARBON BLOWN ASTM E4-84 CLASS I RIGID POLYURETHANE FOAMS**
FESTE KOHLENWASSERSTOFF- ODER FLUORKOHLENWASSERSTOFFGEBLASENE ASTM-E4-84-KLASSE-1-POLYURETHANSCHAUMSTOFFE
MOUSSES DE POLYURETHANNE RIGIDE ASTM E4-84 DE CLASSE I GONFLEE PAR HYDROCARBONE OU HYDROFLUOROCARBONE

(30) Priority: 13.05.2005 US 128707
(43) Date of publication of application: 06.02.2008
(73) Proprietor: Bayer MaterialScience LLC, Pittsburgh, PA 15205-9741 (US)
(72) Inventor: DOBRANSKY, Michael, A., Pittsburgh, Pennsylvania 15236-4049 (US); YOURD, Raymond, A., Pittsburgh, Pennsylvania 15216 (US); WILSON, Patricia, M.,, Pittsburgh, Pennsylvania 15205-2347 (US)
(74) Representative: Feldhues, Michael L.F.
(86) International application number: PCT/US2006/017705
(87) International publication number: WO 2006/124364

(56) References cited:
- US-A- 5 889 066
- US-B1- 6 207 725
- US-B1- 6 319 962

## Description

### Field of the Invention

The present invention relates, in general, to polyurethanes, and more specifically, to hydrocarbon or hydrofluorocarbon blown polyurethane foams which meet the requirements of ASTM E-84 for Class I materials.

### Background of the Invention

For many years, the dominant blowing agents used to expand polyurethane foams had been the chlorofluorocarbons ("CFCs"). These blowing agents were phased out after having been determined to pose a threat to stratospheric ozone. Subsequent to the CFCs being phased out, the most common class of blowing agents became the hydrogenated chlorofluorocarbons ("HCFCs"). Although these are considered to be more environmentally friendly expansion agents, the HCFCs still have a small ozone depleting potential ("ODP") and therefore were also mandated for phase out.

Metal-faced foam panel manufacturers heretofore have used 1,1-dichloro-1-fluoroethane (HCFC-141b) as the blowing agent of choice for their polyurethane foams. The manufacturers of discontinuous panels for cold storage applications (e.g., walk-in coolers) as well as continuous building panel manufacturers must switch from HCFC-141b, to an approved substitute, such as hydrofluorocarbons ("HFCs"), hydrocarbons ("HCs") or carbon dioxide, which is generated by the reaction of water with isocyanate. These foams must meet the ASTM E-84 "Standard Test Method for Surface Burning Characteristics of Building Materials" (ASTM International), known as the tunnel test with a Class I rating flammability requirement. In addition, the foam must also have good processing characteristics, good physical properties (e.g., dimensional stability at low temperatures), and good adhesion to metal substrates.

Among the potential blowing agents for such foam manufacturers are 1,1,1,2-tetrafluoroethane (HFC-134a), 1,1,1,3,3-pentafluoropropane (HFC-245fa) and the hydrocarbons (e.g., cyclopentane, isomers of pentane). Whereas HCFC-141b aided bum properties of foam in which it was used, hydrofluorocarbons and hydrocarbons, unfortunately, do not provide a similar benefit. Typically, polyisocyanurate ("PIR") foams (isocyanate index greater than about 175) exhibit good bum performance due to their isocyanurate structure, whereas polyurethane ("PUR") foams (isocyanate index less than about 175) do not. The "isocyanate index" is the quotient of the number of isocyanate groups divided by the number of isocyanate-reactive groups, multiplied by 100. Manufacturers prefer PUR foam for discontinuous panels and continuous building panels because it offers them better processing, better properties and better adhesion to metal than does PIR foam. However, meeting the ASTM E84 Class I burn requirement heretofore has been problematic for PUR foams blown with hydrofluorocarbons and hydrocarbons. In addition, many older foam machines operate only at fixed ratios of 1:1 or 1.25:1 by volume of isocyanate to polyol. This effectively limits them to the use of PUR systems, especially when higher water levels are used in the formulation.

U.S. Pat. No. 6,319,962, issued to Singh et al., teaches rigid polyurethane or urethane modified polyisocyanurate foams having improved flame resistance which are prepared from a composition containing an isocyanate, an isocyanate reactive composition, a hydrocarbon/water blowing agent and a halogen substituted phosphorus material in which the halogen is present in the amount of no more than 1.4% by weight relative to the total weight of the reaction system, and the phosphorus is present in the amount ranging from 0.3 to 2% by weight relative to the total weight of the reaction system. The foams of Singh et al. utilize hydrocarbons alone or in combination with hydrofluorocarbons at an isocyanate index of 275-325. As those skilled in the art are aware, a higher index typically improves surface burning characteristics of the foam.

Therefore, a need continues to exist in the art for ASTM E-84 Class I polyurethane rigid foams blown with hydrofluorocarbons or hydrocarbons which are low in phosphorus and may be reacted at a lower isocyanate index to provide the better processing, properties and adhesion to metal which are characteristic of polyurethane foams.

### Summary of the Invention

Accordingly, the present invention provides a rigid polyurethane foam formed from the reaction product of a polyisocyanate, a polyol component containing in a ratio of from 1:1 to 4:1, an aromatic polyester polyol, and a sucrose-initiated polyether polyol and a flame retardant component made from a chlorine-containing combustion modifier and a bromine-containing combustion modifier in the presence of a hydrocarbon or hydrofluorocarbon blowing agent, optionally, one or more of water, surfactants, pigments, catalysts and fillers, and contains, based on the weight of the foam, at least 3 wt.% chlorine, from 1 wt.% to 2 wt.% bromine and less than 1 wt.% phosphorus. The polyol component is reacted with the polyisocyanate at an index of 160 or less to form a rigid polyurethane foam exhibiting good properties, good processing and good adhesion to metal and satisfies the ASTM E-84 Class I bum requirement.

These and other advantages and benefits of the present invention will be apparent from the Detailed Description of the invention herein below.

### Detailed Description of the Invention

The present invention will now be described for purposes of illustration and not limitation.

The present invention provides a rigid polyurethane foam formed from the reaction product, at an isocyanate index of 160 or less, of at least one polyisocyanate with a polyol component containing in a ratio of from 1:1 to 4:1, an aromatic polyester polyol, and a sucrose-initiated polyether polyol and a flame retardant component made from a chlorine-containing combustion modifier and a bromine-containing combustion modifier in the presence of a hydrocarbon or hydrofluorocarbon blowing agent, optionally, one or more of water, surfactants, pigments, catalysts and fillers, wherein the foam meets a Class I rating in accordance with ASTM E-84 testing and contains, based on the weight of the foam, at least 3 wt.% chlorine, from 1 wt.% to 2 wt.% bromine and less than 1 wt.% phosphorus.

The present invention further provides a process for producing a rigid polyurethane foam involving reacting at an isocyanate index of 160 or less, at least one polyisocyanate, a polyol component containing in a ratio of from 1:1 to 4:1, an aromatic polyester polyol, and a sucrose-initiated polyether polyol and a flame retardant component made from a chlorine-containing combustion modifier and a bromine-containing combustion modifier in the presence of a hydrocarbon or hydrofluorocarbon blowing agent, optionally, one or more of water, surfactants, pigments, catalysts and fillers, wherein the foam meets a Class I rating in accordance with ASTM E-84 testing and contains, based on the weight of the foam, at least 3 wt.% chlorine, from 1 wt.% to 2 wt.% bromine and less than 1 wt.% phosphorus.

The rigid polyurethane foams according to the invention are prepared by reacting a polyol component with at least one organic polyisocyanate. Suitable polyisocyanates are known to those skilled in the art and include unmodified polyisocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula

Q(NCO)ₙ

in which n is a number from 2-5, preferably 2-3, and Q is an aliphatic hydrocarbon group containing 2-18, preferably 6-10, carbon atoms; a cyclo-aliphatic hydrocarbon group containing 4-15, preferably 5-10, carbon atoms; an araliphatic hydrocarbon group containing 7-34, preferably 7-20, carbon atoms; or an aromatic hydrocarbon group containing 6-15, preferably 6-13, carbon atoms.

Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and -1,4-diisocyanate, and mixtures of these isomers; 1-isocyanato-3,3,5-trimethyl-5-isocyanatomethylcyclohexane (isophorone diisocyanate; e.g., German Auslegeschrift 1,202,785 and U.S. Pat. No. 3,401,190); 2,4- and 2,6-hexahydrotoluene diisocyanate and mixtures of these isomers; dicyclohexylmethane-4,4'-diisocyanate (hydrogenated MDI, or HMDI); 1,3- and 1,4-phenylene diisocyanate; 2,4- and 2,6-toluene diisocyanate and mixtures of these isomers (TDI); diphenylmethane-2,4'- and/or -4,4'-diisocyanate (MDI); naphthylene-1,5-diisocyanate; triphenylmethane-4,4',4"-triisocyanate; polyphenyl-polymethylene-polyisocyanates of the type which may be obtained by condensing aniline with formaldehyde, followed by phosgenation (crude MDI), which are described, for example, in GB 878,430 and GB 848,671; norbomane diisocyanates, such as described in U.S. Pat. No. 3,492,330; m- and p-isocyanatophenyl sulfonylisocyanates of the type described in U.S. Pat. No. 3,454,606; perchlorinated aryl polyisocyanates of the type described, for example, in U.S. Pat. No. 3,227,138; modified polyisocyanates containing carbodiimide groups of the type described in U.S. Pat. No. 3,152,162; modified polyisocyanates containing urethane groups of the type described, for example, in U.S. Pat. Nos. 3,394,164 and 3,644,457; modified polyisocyanates containing allophanate groups of the type described, for example, in GB 994,890, BE 761,616, and NL 7,102,524; modified polyisocyanates containing isocyanurate groups of the type described, for example, in U.S. Pat. No. 3,002,973, German Patentschriften 1,022,789, 1,222,067 and 1,027,394, and German Offenlegungsschriften 1,919,034 and 2,004,048; modified polyisocyanates containing urea groups of the type described in German Patentschrift 1,230,778; polyisocyanates containing biuret groups of the type described, for example, in German Patentschrift 1,101,394, U.S. Pat. Nos. 3,124,605 and 3,201,372, and in GB 889,050; polyisocyanates obtained by telomerization reactions of the type described, for example, in U.S. Pat. No. 3,654,106; polyisocyanates containing ester groups of the type described, for example, in GB 965,474 and GB 1,072,956, in U.S. Pat. No. 3,567,763, and in German Patentschrift 1,231,688; reaction products of the above-mentioned isocyanates with acetals as described in German Patentschrift 1,072,385; and polyisocyanates containing polymeric fatty acid groups of the type described in U.S. Pat. No. 3,455,883. It is also possible to use the isocyanate-containing distillation residues accumulating in the production of isocyanates on a commercial scale, optionally in solution in one or more of the polyisocyanates mentioned above. Those skilled in the art will recognize that it is also possible to use mixtures of the polyisocyanates described above. A particularly preferred isocyanate for inclusion in the foams of the present invention is polymeric MDI (PMDI), or prepolymers of PMDI.

Other isocyanate-terminated prepolymers may also be employed in the preparation of the foams of the present invention. Prepolymers may be prepared by reacting an excess of organic polyisocyanate or mixtures thereof with a minor amount of an active hydrogen-containing compound as determined by the well-known Zerewitinoff test, as described by Kohler in Journal of the American Chemical Society, 49, 3181(1927). These compounds and their methods of preparation are well known to those skilled in the art. The use of any one specific active hydrogen compound is not critical; any such compound can be employed in the practice of the present invention.

Polyester polyols are also known in the art for imparting good fire performance in foams and are typically used in polyisocyanurate ("PIR") foams. In polyurethane ("PUR") foams such polyols are typically used only at fairly low concentrations, along with higher-functional polyether polyols mainly due to their softening effect on polymer properties. The present inventors have found, surprisingly, that polyester polyols may successfully be used at very high concentrations (i.e., up to 4:1 polyester:polyether polyol ratio) and still provide foams having good properties at a 1:0.9 to 1:1.3, more preferably at a 1:1 to 1:1.25, most preferably at a 1:1 polyol to isocyanate volumetric ratio_so that the foam may be processed on older foam machines.

Suitable aromatic polyester polyols include those prepared by reacting a polycarboxylic acid and/or a derivative thereof or an anhydride with a polyhydric alcohol, wherein at least one of these reactants is aromatic. The polycarboxylic acids may be any of the known aliphatic, cycloaliphatic, aromatic, and/or heterocyclic polycarboxylic acids and may be substituted, (e.g., with halogen atoms) and/or unsaturated. Examples of suitable polycarboxylic acids and anhydrides include oxalic acid, malonic acid, glutaric acid, pimelic acid, succinic acid, adipic acid, suberic acid, azelaic acid, sebacic acid, phthalic acid, isophthalic acid, terephthalic acid, trimellitic acid, trimellitic acid anhydride, pyromellitic dianhydride, phthalic acid anhydride, tetrahydrophthalic acid anhydride, hexahydrophthalic acid anhydride, endomethylene tetrahydrophthalic acid anhydride, glutaric acid anhydride, maleic acid, maleic acid anhydride, fumaric acid, and dimeric and trimeric fatty acids, such as those of oleic acid which may be in admixture with monomeric fatty acids. Simple esters of polycarboxylic acids may also be used such as terephthalic acid dimethylester, terephthalic acid bisglycol and extracts thereof.

Suitable aromatic polycarboxylic acid derivatives are: dimethyl or diethyl esters of polycarboxylic acids such as phthalic acid, isophthalic acid, terephthalic acid and trimellitic acid. Examples of suitable aromatic anhydrides are phthalic anhydride, tetrahydrophthalic anhydride, and pyromellitic anhydride.

The polyhydric alcohols suitable for the preparation of polyester polyols may be aliphatic, cycloaliphatic, aromatic, and/or heterocyclic. The polyhydric alcohols optionally may include substituents which are inert in the reaction, for example, chlorine and bromine substituents, and/or may be unsaturated. Suitable amino alcohols, such as monoethanolamine, diethanolamine or the like may also be used. Examples of suitable polyhydric alcohols include ethylene glycol, propylene glycol, polyoxyalkylene glycols (such as diethylene glycol, polyethylene glycol, dipropylene glycol and polypropylene glycol), glycerol and trimethylolpropane. Examples of suitably aromatic polyhydric alcohols are 1,4-benzene diol, hydroquinone di (2-hydroxyethyl) ether, bis (hydroxyethyl) terephthalate, and resorcinol.

There are many polyester polyols available from a variety of suppliers such as Stepan, INVISTA, OXID and others.

The sucrose-based polyol employed in the foam of the present invention may be a polyether polyol preferably prepared by reacting sucrose and optionally other initiators (with or without water) with ethylene oxide and/or propylene oxide in the presence of an alkaline catalyst. The product may be treated with an acid to neutralize the alkaline catalyst and the salt formed optionally removed from the product. U.S. Pat. No. 4,430,490 discloses one such process for making suitable sucrose-based polyols . Sucrose polyethers of the type described, for example, in German Auslegeschriften 1,176,358 and 1,064,938 may also be used according to the invention.

The sucrose-based polyether polyol is preferably included in the polyol component in an amount such that the ratio of aromatic polyester to sucrose-based polyether polyols is from 1:1 to 4:1.

The inventive polyurethane forming formulation also includes a flame retardant component containing a first combustion modifier with a high chlorine content and a second bromine-containing combustion modifier. These combustion modifiers are selected such that the resultant foam contains at least 3 wt.% chlorine, from 1 wt.% to 2 wt.% bromine and less than 1 wt.% phosphorus, with all the weight percents being based on the weight of the foam. Suitable combustion modifiers may be obtained from suppliers such as AKZO Nobel, Albemarle, Great Lakes and others.

The blowing agent may be any hydrocarbon and/or hydrofluorocarbon known to those skilled in the art. Some examples of preferred hydrocarbon and hydrofluorocarbon blowing agents include 1,1,1,3,3-pentafluoropropane (HFC-245fa), 1,1,1,3,3-pentafluorobutane (HFC 365mfc), 1,1,1,2-tetrafluoroethane (HFC-134a), cyclopentane, isopentane and mixtures thereof.

The isocyanate and polyol component optionally may be reacted in the presence of at least one of water, surfactants, pigments, catalysts and fillers.

It may be advantageous to employ a minor amount of a surfactant to stabilize the foaming reaction mixture until it obtains rigidity. Any suitable surfactant can be employed in the invention, including silicone/ethylene oxide/propylene oxide copolymers. Examples of surfactants useful in the present invention include those available from manufacturers such as GE Silicones, Air Products_and Chemicals and Goldschmidt Chemical Corporation. Other suitable surfactants are described in U.S. Pat. Nos. 4,365,024 and 4,529,745. Other, less preferred surfactants include polyethylene glycol ethers of long chain alcohols, tertiary amine or alkanolamine salts of long chain alkyl acid sulfate esters, alkylsulfonic esters, alkylarylsulfonic acids. Such surfactants are employed in amounts sufficient to stabilize the foaming reaction mixture against collapse and the formation of large and uneven cells. The surfactant may be included in the polyol component in an amount of from 0.05 to 10, and preferably from 0.1 to 6, weight percent of the polyol component.

Suitable catalysts include tertiary amines and metal compounds known to those skilled in the art. Suitable tertiary amine catalysts include triethylamine, tributylamine, triethylene diamine, N-methylmorpholine, N-ethylmorpholine, N,N,N',N'-tetramethylethylene diamine, pentamethyldiethylene triamine, and higher homologs, 1,4-diazabicyclo[2.2.2]octane, N-methyl-N'-(dimethylaminoethyl)piperazine, bis(dimethylaminoalkyl)piperazines, N,N-dimethylbenzylamine, N,N-dimethylcyclohexylamine, N,N-diethylbenzylamine, bis(N,N-diethylaminoethyl)adipate, N,N,N',N'-tetramethyl-1,3-butanediamine, 1,3,5-tris-(3-dimethylaminopropyl)hexahydro-S-triazine, N-(2-hydroxypropyl)-N-trimethylammonium formate in dipropylene glycol, pentamethyldiethylenetriamine (PMDETA), N,N,N'-trimethylaminoethyl-ethanolamine, N,N-dimethyl-β-phenylethylamine, amine salt of diazabicycloundecene and formic acid, 1,2-dimethylimidazole, 2-methylimidazole, monocyclic and bicyclic amidines, bis(dialkylamino)alkyl ethers (U.S. Pat. No: 3,330,782), and tertiary amines containing amide groups (preferably formamide groups). The catalysts used may also be the known Mannich bases of secondary amines (such as dimethylamine) and aldehydes (preferably formaldehyde) or ketones (such as acetone) and phenols.

Suitable catalysts also include certain tertiary amines containing isocyanate-reactive hydrogen atoms. Examples of such catalysts include triethanolamine, triisopropanolamine, N-methyldiethanolamine, N-ethyldiethanolamine, N,N-dimethylethanolamine, their reaction products with alkylene oxides (such as propylene oxide and/or ethylene oxide) and secondary-tertiary amines.

Other suitable catalysts include organic metal compounds, especially organic tin, bismuth, and zinc compounds. Suitable organic tin compounds include those containing sulfur, such as dioctyl tin mercaptide and, preferably, tin(II) salts of carboxylic acids, such as tin(II) acetate, tin(II) octoate, tin(II) ethylhexoate, and tin(II) laurate, as well as tin(IV) compounds, such as dibutyltin dilaurate, dibutyltin dichloride, dibutyltin diacetate, dibutytin maleate, and dioctyltin diacetate. Suitable bismuth compounds include bismuth neodecanoate, bismuth versalate, and various bismuth carboxylates known in the art. Suitable zinc compounds include zinc neodecanoate and zinc versalate. Mixed metal salts containing more than one metal (such as carboxylic acid salts containing both zinc and bismuth) are also suitable catalysts. Any of the above-mentioned catalysts may, of course, be used as mixtures. Suitable catalyst mixtures may be found in U.S. Pat. No. 5,401,824.

The catalyst(s) may be included in the polyol component in an amount preferably such that the catalyst(s) chosen produce the desired reactivity profile based on the chosen volume of blowing agent used.

Fillers and reinforcing agents are also suitable for use in the presently claimed invention. Suitable fillers and reinforcing agents include both organic and inorganic compounds. These inorganic compounds include, for example, compounds such as glass in the form of fibers, flakes, cut fibers, mats, or microspheres; mica, wollastonite; carbon fibers; carbon black; talc; and calcium carbonate. Suitable organic compounds include, for example, expanded microspheres which are known and described in, for example, U.S. Pat. Nos. 4,829,094, 4,843,104, 4,902,722 and 5,244,613. Also suitable are substances such as barium sulfate, calcium silicate, clays, kieselguhr, whiting, mica, liquid crystal fibers and aramide fibers. The filler may be included in the polyol component in any amounts up to 5 wt.%, more preferably from 0.1 wt.% to 3 wt.%, based on the weight of the foam.

When carrying out the reaction of the polyol component with the polyisocyanate, the quantity of the polyisocyanate should be such that the isocyanate index is 160 or less. By "isocyanate index" is herein meant the quotient of the number of isocyanate groups divided by the number of isocyanate-reactive groups, multiplied by 100.

### EXAMPLES

The present invention is further illustrated, but is not to be limited, by the following examples. All quantities given in "parts" and "percents" are understood to be by weight, unless otherwise indicated. The following materials were used in preparing the foams of the examples:

| | |
|---|---|
| Polyol A | a diethylene glycol terephthalate polyester polyol having a hydroxyl number of 315 mg KOH/g and a number average functionality of 2.3; |
| Polyol B | a sucrose-initiated polyether polyol having a hydroxyl number of 380 mg KOH/g and a number average functionality of 5.8; |
| Surfactant | a silicone surfactant available as TEGOSTAB B-8469 from Goldschmidt AG; |
| Combustion Modifier A | tris-(1,3-dichloroisopropyl)phosphate); |
| Combustion Modifier B | a mixed ester of 3,4,5,6-tetrabromophthalic anhydride with diethylene glycol and propylene glycol; |
| Catalyst A | 1,3,5-tris-(3-dimethylaminopropyl)hexahydro-S-triazine; |
| Catalyst B | N-(2-hydroxypropyl)-N-trimethylammonium formate in dipropylene glycol; |
| Catalyst C | pentamethyldiethylenetrlamine (PMDETA); |
| Catalyst D | N,N,N'-trimethylaminoethyl-ethanolamine; |
| Blowing Agent A | 1,1,1,3,3-pentafluoropropane (HFC-245fa); |
| Blowing Agent B | a 70/30 mixture of cyclopentane and isopentane; |
| Isocyanate | polymeric diphenylmethane diisocyanate (PMDI) having an isocyanate content of 31.5% and functionality of 3. |

Foams were made from the parts by weight of the components listed below in Table I. The polyols and other components were first combined and then reacted with the isocyanate. Core density was determined according to ASTM D 1622, open cell/closed cell content according to ASTM D 6226 and thermal conductivity according to ASTM C 518, and the results are given below in Table I.

**Table I**

| **Component (pbw)** | **Ex. 1** | **Ex. 2** |
|---|---|---|
| Polyol A | 46.00 | 46.00 |
| Polyol B | 11.60 | 11.60 |
| Combustion Modifier A | 16.50 | 16.50 |
| Combustion Modifier B | 7.20 | 7.20 |
| Surfactant | 2.00 | 1.95 |
| Catalyst A | 0.50 | - |
| Catalyst B | - | 1.58 |
| Catalyst C | - | 0.26 |
| Catalyst D | - | 0.32 |
| Blowing Agent A | 15.00 | - |
| Blowing Agent B | - | 4.84 |
| Water | 1.20 | 1.20 |
| Isocyanate | 106.0 | 113.0 |
| Isocyanate Index | 154 | 160 |
| **Foam Properties** | - | - |
| Overall Density kg/m³ (pcf) | 38.4 (2.4) | 44.9 (2.8) |
| Core Density (pcf) | 36.8 (2.3) | 41.6 (2.6) |
| Open-cell content (%) | 5.9 | N.D. |
| Closed-cell content | | N.D. |
| (%) | 91.0 | |
| Initial k-Factor at 23.9°C (75°F) W/m²K (BTU-in/h-ft²-°F) | 0.0228 (0.130) | 0.0296 (0.169) |

| | | |
|---|---|---|
| **N.D. - not determined** | | |

Dimensional stability of the foam of Example 1 was measured, according to ASTM D 2126, at 70°C at 100% relative humidity, at 100°C at ambient relative humidity and at -30°C at ambient relative humidity at 1, 7 and 28 days. Those results are presented below in Table II.

**Table II**

| **Dimensional Stability** | **70°C at 100°% Relative Humidity (avg.% change)** | **100°C at Ambient Relative Humidity (avg.% change)** | **-30°C at Ambient Relative Humidity (avg.% change)** |
|---|---|---|---|
| 1 Day | 7.1 | 2.8 | -0.4 |
| 7 Days | 7.1 | 6.1 | 0.5 |
| 28 Days | 10.6 | 10.9 | 3.6 |

Compressive strengths at 5% and at 10% were measured according to ASTM D 1621 and are summarized below in Table III.

**Table III**

| **Compressive Strength** | Parallel kPa (psi) | Perpendicular kPa (psi) |
|---|---|---|
| 5% (Ex. 1) | 120 (17.5) | 206 (29.9) |
| 10% (Ex. 1) | 129 (18.8) | 200 (29.0) |
| 10% (Ex. 2) | N.D. | 167 (24.2) |

| | | |
|---|---|---|
| **N.D. - not determined** | | |

The performance of each of the inventive foams was assessed by ASTM E-84 in which a flame spread index of 0-25 is a Class I; 26-75 is Class II; and 76-225 is Class III. In the E-84 test, a smoke limit of less than 450 is required for each of these classes. The ASTM E-84 tunnel test results are summarized below in Table IV. As can be appreciated by reference to Table IV below, the inventive foams achieved a Class I rating in the ASTM E-84 test.

**Table IV**

| **ASTM E-84** | **Foam of Ex. 1** | | **Foam of Ex. 2** | |
|---|---|---|---|---|
| | **Burn 1** | **Burn 2** | **Burn 1** | **Burn 2** |
| Flame | 25 | 20 | 20 | 20 |
| Smoke | 160 | 135 | 250 | 95 |

The inventors herein envision that the inventive foams can be used for any application requiring E-84 Class I type bum properties such as architectural building panels, walk-in coolers and refrigerated warehouses.

## Claims

1. A rigid polyurethane foam comprising the reaction product, at an isocyanate index of 160 or less, of:
at least one polyisocyanate;
a polyol component comprising in a ratio of from 1:1 to 4:1,
an aromatic polyester polyol, and
a sucrose-initiated polyether polyol; and
a flame retardant component comprising,
a chlorine-containing combustion modifier, and
a bromine-containing combustion modifier;
in the presence of
a hydrocarbon or hydrofluorocarbon blowing agent, optionally, one or more of water, surfactants, pigments, catalysts and
fillers,
wherein the foam meets a Class I rating in accordance with ASTM E-84 testing and contains, based on the weight of the foam, at least 3 wt.% chlorine, from 1 wt.% to 2 wt.% bromine and less than 1 wt.% phosphorus.

2. The rigid polyurethane foam according to Claim 1, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenyl-methane-2,4'-and/or -4,4'-diisocyanate (MDI), polymeric diphenylmethane diisocyanate (PMDI), naphthylene-1,5-diisocyanate, triphenyl-methane-4,4',4"-triisocyanate, .
polyphenyl-polymethylene-polyisocyanates (crude MDI), norbomane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modified polyisocyanates, urea-modified polyisocyanates, biuret containing polyisocyanates and isocyanate-terminated prepolymers.

3. The rigid polyurethane foam according to Claim 1, wherein the blowing agent is chosen from 1,1,1,3,3 -pentafluoropropane (HFC-245fa), 1,1,1,3,3-pentafluorobutane (HFC 365mfc), 1,1,1,2-tetrafluoroethane (HFC-134a), cyclopentane, isopentane and mixtures thereof.

4. The rigid polyurethane foam according to Claim 1, wherein the aromatic polyester polyol is based on one of phthalic acid, isophthalic acid, terephthalic acid, trimellitic acid, dimethyl or diethyl esters of phthalic acid, dimethyl or diethyl esters of isophthalic acid, dimethyl or diethyl esters of terephthalic acid, dimethyl or diethyl esters of trimellitic acid, phthalic anhydride, tetrahydrophthalic anhydride and pyromellitic anhydride.

5. The rigid polyurethane foam according to Claim 1, wherein the aromatic polyester polyol is based on one of 1,4-benzene diol, 1,3-benzenediol (resorcinol), hydroquinone di (2-hydroxyethyl) ether and bis (hydroxyethyl) terephthalate.

6. The rigid polyurethane foam according to Claim 1, wherein the filler is chosen from mica, wollastonite, carbon fibers, carbon black, talc, calcium carbonate, barium sulfate, calcium silicate, clays, kieselguhr, whiting, liquid crystal fibers, aramide fibers and glass in the form of fibers, flakes, cut fibers, mats, or microspheres.

7. The rigid polyurethane foam according to Claim 1, wherein the catalyst comprises one or more chosen from triethylamine, tributylamine, triethylene diamine, N-methylmorpholine, N-ethylmorpholine, N,N,N',N'-tetramethylethylene diamine, pentamethyldiethylene triamine, 1,4-diazabicyclo[2.2.2]octane, N-methyl-N'-(dimethylaminoethyl)piperazine, bis(dimethylaminoalkyl)piperazines, N,N-dimethylbenzylamine, N,N-dimethylcyclohexylamine, N,N-diethyl-benzylamine, bis(N,N-diethylaminoethyl)adipate, N,N,N',N'-tetramethyl-1,3-butanediamine, 1,3,5-tris-(3-dimethylaminopropyl)hexahydro-S-triazine, N-(2-hydroxypropyl)-N-trimethylammonium formate in dipropylene glycol, pentamethyldiethylenetriamine (PMDETA), N,N,N'-trimethylaminoethyl-ethanolamine, N,N-dimethyl-β-phenylethylamine, amine salt of diazabicycloundecene and formic acid, 1,2-dimethylimidazole, 2-methylimidazole, monocyclic and bicyclic amidines, bis(dialkylamino)alkyl ethers, triethanolamine, triisopropanolamine, N-methyldiethanolamine, N-ethyldiethanolamine, N,N-dimethylethanolamine, dioctyl tin mercaptide, tin(II) acetate, tin(II) octoate, tin(II) ethylhexoate, tin(II) laurate, dibutyltin dilaurate, dibutyltin dichloride, dibutyltin diacetate, dibutytin maleate, and dioctyltin diacetate, bismuth neodecanoate, bismuth versalate, bismuth carboxylates, zinc neodecanoate, zinc versalate and carboxylic acid salts containing zinc and bismuth.

8. The rigid polyurethane foam according to Claim 1, wherein the polyol component is reacted with the polyisocyanate at a polyol to isocyanate volumetric ratio of 1:0.9 to 1:1.3.

9. The rigid polyurethane foam according to Claim 1, wherein the polyol component is reacted with the polyisocyanate at a polyol to isocyanate volumetric ratio of 1:1 to 1:1.25.

10. The rigid polyurethane foam according to Claim 1, wherein the polyol component is reacted with the polyisocyanate at a polyol to isocyanate volumetric ratio of 1:1.

11. The rigid polyurethane foam according to Claim 1, wherein the chlorine-containing combustion modifier is tris-(1,3-dichloroisopropyl)phosphate).

12. The rigid polyurethane foam according to Claim 1, wherein the bromine-containing combustion modifier is a mixed ester of 3,4,5,6-tetrabromophthalic anhydride with diethylene glycol and propylene glycol.

13. A process for producing a rigid polyurethane foam comprising reacting at an isocyanate index of 160 or less:
at least one polyisocyanate;
a polyol component comprising in a ratio of from 1:1 to 4:1,
an aromatic polyester polyol, and
a sucrose-initiated polyether polyol; and
a flame retardant component comprising,
a chlorine-containing combustion modifier, and
a bromine-containing combustion modifier;
in the presence of
a hydrocarbon or hydrofluorocarbon blowing agent, optionally, one or more of water, surfactants, pigments, catalysts and
fillers,
wherein the foam meets a Class I rating in accordance with ASTM E-84 testing and contains, based on the weight of the foam, at least 3 wt.% chlorine, from 1 wt.% to 2 wt.% bromine and less than 1 wt.% phosphorus.

14. The process according to Claim 13, wherein the at least one polyisocyanate is chosen from ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-and -1,4-diisocyanate, 1-isocyanato-3,3,5-trimethyl-5-isocyanatomethyl-cyclohexane (isophorone diisocyanate), 2,4- and 2,6-hexahydrotoluene diisocyanate, dicyclohexylmethane-4,4'-diisocyanate (hydrogenated MDI, or HMDI), 1,3- and 1,4-phenylene diisocyanate, 2,4- and 2,6-toluene diisocyanate (TDI), diphenylethane-2,4'- and/or -4,4'-diisocyanate (MDI), polymeric diphenylmethane diisocyanate (PMDI), naphthylene-1,5-diisocyanate, triphenyl-methane-4,4',4"-triisocyanate, polyphenyl-polymethylene-polyisocyanates (crude MDI), norbomane diisocyanates, m- and p-isocyanatophenyl sulfonylisocyanates, perchlorinated aryl polyisocyanates, carbodiimide-modified polyisocyanates, urethane-modified polyisocyanates, allophanate-modified polyisocyanates, isocyanurate-modifled polyisocyanates, urea-modified polyisocyanates, biuret containing polyisocyanates and isocyanate-terminated prepolymers.

15. The process according to Claim 13, wherein the blowing agent is chosen from 1,1,1,3,3-pentaffuoropropane (HFC-245fa), 1,1,1,3,3-pentafluorobutane (HFC 365mfc), 1,1,1,2-tetrafluoroethane (HFC-134a), cyclopentane, isopentane and mixtures thereof.

16. The process according to Claim 13, wherein the aromatic polyester polyol is based on one of phthalic acid, isophthalic acid, terephthalic acid, trimellitic acid, dimethyl or diethyl esters of phthalic acid, dimethyl or diethyl esters of isophthalic acid, dimethyl or diethyl esters of terephthalic acid, dimethyl or diethyl esters of trimellitic acid, phthalic anhydride, tetrahydrophthalic anhydride and pyromellitic anhydride.

17. The process according to Claim 13, wherein the aromatic polyester polyol is based on one of 1,4-benzene diol, 1,3-benzenediol (resorcinol), hydroquinone di (2-hydroxyethyl) ether and bis (hydroxyethyl) terephthalate.

18. The process according to Claim 13, wherein the filler is chosen from mica, wollastonite, carbon fibers, carbon black, talc, calcium carbonate, barium sulfate, calcium silicate, clays, kieselguhr, whiting, liquid crystal fibers, aramide fibers and glass in the form of fibers, flakes, cut fibers, mats, or microspheres.

19. The process according to Claim 13, wherein the catalyst comprises one or more chosen from triethylamine, tributylamine, triethylene diamine, N-methylmorpholine, N-ethylmorpholine, N,N,N',N'-tetramethylethylene diamine, pentamethyldiethylene triamine, 1,4-diazabicyclo[2.2.2]octane, N-methyl-N'-(dimethylaminoethyl)piperazine, bis(dimethylaminoalkyl)piperazines, N,N-dimethylbenzylamine, N,N-dimethylcyclohexylamine, N,N-diethylbenzylamine, bis(N,N-diethylaminoethyl)adipate, N,N,N',N'-tetramethyl-1,3-butanediamine, 1,3,5-tris-(3-dimethylaminopropyl)hexahydro-S-triazine, N-(2-hydroxypropyl)-N-trimethylammonium formate in dipropylene glycol, pentamethyldiethylenetriamine (PMDETA), N,N,N'-trimethylaminoethyl-ethanolamine, N,N-dimethyl-β-phenylethylamine, amine salt of diazabicycloundecene and formic acid, 1,2-dimethylimidazole, 2-methylimidazole, monocyclic and bicyclic amidines, bis(dialkyl-amino)alkyl ethers, triethanolamine, triisopropanolamine, N-methyldiethanolamine, N-ethyldiethanolamine, N,N-dimethylethanolamine, dioctyl tin mercaptide, tin(II) acetate, tin(II) octoate, tin(II) ethylhexoate, tin(II) laurate, dibutyltin dilaurate, dibutyltin dichloride, dibutyltin diacetate, dibutytin maleate, and dioctyltin diacetate, bismuth neodecanoate, bismuth versalate, bismuth carboxylates, zinc neodecanoate, zinc versalate and carboxylic acid salts containing zinc and bismuth.

20. The process according to Claim 13, wherein the polyol component is reacted with the polyisocyanate at a polyol to isocyanate volumetric ratio of 1:0.9 to 1:1.3.

21. The process according to Claim 13, wherein the polyol component is reacted with the polyisocyanate at a polyol to isocyanate volumetric ratio of 1:1 to 1:1.25

22. The process according to Claim 13, wherein the polyol component is reacted with the polyisocyanate at a polyol to isocyanate volumetric ratio of 1:1.

23. The process according to Claim 13, wherein the chlorine-containing combustion modifier is tris-(1,3-dichloroisopropyl)phosphate).

24. The process according to Claim 13, wherein the bromine-containing combustion modifier is a mixed ester of 3,4,5,6-tetrabromophthalic anhydride with diethylene glycol and propylene glycol.

## Patentansprüche

1. Polyurethan-Hartschaumstoff, umfassend das Produkt der Umsetzung von
mindestens einem Polyisocyanat;
einer Polyolkomponente, die in einem Verhältnis von 1:1 bis 4:1
ein aromatisches Polyesterpolyol und
ein mit Saccharose gestartetes Polyetherpolyol umfaßt; und
einer Flammschutzkomponente, die
einen chlorhaltigen Verbrennungsmodifikator und einen bromhaltigen Verbrennungsmodifikator umfaßt;
bei einem Isocyanat-Index von 160 oder weniger in Gegenwart von
einem Kohlenwasserstoff oder teilfluorierten Kohlenwasserstoff als Treibmittel und gegebenenfalls Wasser, Tensiden, Pigmenten, Katalysatoren und/oder Füllstoffen,
wobei der Schaumstoff gemäß Prüfung nach ASTM E-84 in die Klasse I fällt und, bezogen auf das Gewicht des Schaumstoffs, mindestens 3 Gew.-% Chlor, 1 Gew.-% bis 2 Gew.-% Brom und weniger als 1 Gew.-% Phosphor enthält.

2. Polyurethan-Hartschaumstoff nach Anspruch 1, wobei das mindestens eine Polyisocyanat unter Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethylcyclohexan (Isophorondiisocyanat), 2,4- und 2,6-Hexahydrotoluoldiisocyanat, Dicyclohexylmethan-4,4'-diisocyanat (hydriertem MDI oder HMDI), 1,3- und 1,4-Phenylendiisocyanat, 2,4- und 2,6-Toluoldiisocyanat (TDI), Diphenylmethan-2,4'-diisocyanat und/oder Diphenylmethan-4,4'-diisocyanat (MDI), polymerem Diphenylmetandiisocyanat (PMDI), Naphthylen-1,5-diisocyanat, Triphenylmethan-4,4',4"-triisocyanat, Polyphenyl-polymethylen-polyisocyanaten (Roh-MDI), Norbornandiisocyanaten, m- und p-Isocyanatophenylsulfonylisocyanat, perchlorierten Arylpolyisocyanaten, carbodiimidmodifizierten Polyisocyanaten, urethanmodifizierten Polyisocyanaten, allophanatmodifizierten Polyisocyanaten, isocyanuratmodifizierten Polyisocyanaten, harnstoffmodifizierten Polyisocyanaten, biurethaltigen Polyisocyanaten und isocyanatterminierten Prepolymeren ausgewählt ist.

3. Polyurethan-Hartschaumstoff nach Anspruch 1, wobei das Treibmittel unter 1,1,1,3,3-Pentafluorpropan (H-FKW 245fa), 1,1,1,3,3-Pentafluorbutan (H-FKW 365mfc), 1,1,1,2-Tetrafluorethan (H-FKW 134a), Cyclopentan, Isopentan und Mischungen davon ausgewählt ist.

4. Polyurethan-Hartschaumstoff nach Anspruch 1, wobei das aromatische Polyesterpolyol auf Phthalsäure, Isophthalsäure, Terephthalsäure, Trimellitsäure, Dimethyl- oder Diethylestern von Phthalsäure, Dimethyl- oder Diethylestern von Isophthalsäure, Dimethyl- oder Diethylestern von Terephthalsäure, Dimethyl- oder Diethylestern von Trimellitsäure, Phthalsäureanhydrid, Tetrahydrophthalsäureanhydrid oder Pyromellitsäureanhydrid basiert.

5. Polyurethan-Hartschaumstoff nach Anspruch 1, wobei das aromatische Polyesterpolyol auf 1,4-Benzoldiol, 1,3-Benzoldiol (Resorcinol), Hydrochinondi(2-hydroxyethyl)ether oder Bis(hydroxyethyl)terephthalat basiert.

6. Polyurethan-Hartschaumstoff nach Anspruch 1, wobei der Füllstoff unter Glimmer, Wollastonit, Kohlefasern, Ruß, Talk, Calciumcarbonat, Bariumsulfat, Calciumsilicat, Tonen, Kieselguhr, Schlämmkreide, Flüssigkristallfasern, Aramidfasern und Glas in Form von Fasern, Schuppen, geschnittenen Fasern, Matten oder Mikrokugeln ausgewählt ist.

7. Polyurethan-Hartschaumstoff nach Anspruch 1, wobei der Katalysator eine oder mehrere unter Triethylamin, Tributylamin, Triethylendiamin, N-Methylmorpholin, N-Ethylmorpholin, N,N,N',N'-Tetramethylethylendiamin, Pentamethyldiethylentriamin, 1,4-Diazabicyclo[2.2.2]octan, N-Methyl-N'-(dimethylaminoethyl)piperazin, Bis(dimethylaminoalkyl)piperazinen, N,N-Dimethylbenzylamin, N,N-Dimethylcyclohexylamin, N,N-Diethylbenzylamin, Bis(N,N-diethylaminoethyl)adipat, N,N,N',N'-Tetramethyl-1,3-butandiamin, 1,3,5-Tris(3-dimethylaminopropyl)hexahydro-S-triazin, N-(2-Hydroxypropyl)-N-trimethylammoniumformiat in Dipropylenglykol, Pentamethyldiethylentriamin (PMDETA), N,N,N'-Trimethylaminoethyl-ethanolamin, N,N-Dimethyl-β-phenylethylamin, Aminsalz von Diazabicycloundecen und Ameisensäure, 1,2-Dimethylimidazol, 2-Methylimidazol, monocyclischen und bicyclischen Amidinen, Bis(dialkylamino)alkylethern, Triethanolamin, Triisopropanolamin, N-Methyldiethanolamin, N-Ethyldiethanolamin, N,N-Dimethylethanolamin, Dioctylzinnmercaptid, Zinn(II)-acetat, Zinn(II)-octoat, Zinn(II)-ethylhexoat, Zinn(II)-laurat, Dibutylzinndilaurat, Dibutylzinndichlorid, Dibutylzinndiacetat, Dibutylzinnmaleat und Dioctylzinndiacetat, Bismutneodecanoat, Bismutversalat, Bismutcarboxylaten, Zinkneodecanoat, Zinkversalat und Zink und Bismut enthaltenden Carbonsäuresalzen ausgewählte Verbindungen umfaßt.

8. Polyurethan-Hartschaumstoff nach Anspruch 1, wobei die Polyolkomponente mit dem Polyisocyanat in einem volumetrischen Verhältnis von Polyol zu Isocyanat von 1:0,9 bis 1:1,3 umgesetzt wird.

9. Polyurethan-Hartschaumstoff nach Anspruch 1, wobei die Polyolkomponente mit dem Polyisocyanat in einem volumetrischen Verhältnis von Polyol zu Isocyanat von 1:1 bis 1:1,25 umgesetzt wird.

10. Polyurethan-Hartschaumstoff nach Anspruch 1, wobei die Polyolkomponente mit dem Polyisocyanat in einem volumetrischen Verhältnis von Polyol zu Isocyanat von 1:1 umgesetzt wird.

11. Polyurethan-Hartschaumstoff nach Anspruch 1, wobei es sich bei dem chlorhaltigen Verbrennungsmodifikator um Tris(1,3-dichlorisopropyl)phosphat) handelt.

12. Polyurethan-Hartschaumstoff nach Anspruch 1, wobei es sich bei dem bromhaltigen Verbrennungsmodifikator um einen Mischester von 3,4,5,6-Tetrabromphthalsäureanhydrid mit Diethylenglykol und Propylenglykol handelt.

13. Verfahren zur Herstellung eines Polyurethan-Hartschaumstoffs, bei dem man
mindestens ein Polyisocyanat;
eine Polyolkomponente, die in einem Verhältnis von 1:1 bis 4:1
ein aromatisches Polyesterpolyol und
ein mit Saccharose gestartetes Polyetherpolyol umfaßt; und
eine Flammschutzkomponente, die
einen chlorhaltigen Verbrennungsmodifikator und einen bromhaltigen Verbrennungsmodifikator umfaßt;
bei einem Isocyanat-Index von 160 oder weniger in Gegenwart von
einem Kohlenwasserstoff oder teilfluorierten Kohlenwasserstoff als Treibmittel und gegebenenfalls Wasser, Tensiden, Pigmenten, Katalysatoren und/oder Füllstoffen
umsetzt,
wobei der Schaumstoff gemäß Prüfung nach ASTM E-84 in die Klasse I fällt und, bezogen auf das Gewicht des Schaumstoffs, mindestens 3 Gew.-% Chlor, 1 Gew.-% bis 2 Gew.-% Brom und weniger als 1 Gew.-% Phosphor enthält.

14. Verfahren nach Anspruch 13, bei dem man das mindestens eine Polyisocyanat unter Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethylcyclohexan (Isophorondiisocyanat), 2,4- und 2,6-Hexahydrotoluoldiisocyanat, Dicyclohexylmethan-4,4'-diisocyanat (hydriertem MDI oder HMDI), 1,3- und 1,4-Phenylendiisocyanat, 2,4- und 2,6-Toluoldiisocyanat (TDI), Diphenylmethan-2,4'-diisocyanat und/oder Diphenylmethan-4,4'-diisocyanat (MDI), polymerem Diphenylmetandiisocyanat (PMDI), Naphthylen-1,5-diisocyanat, Triphenylmethan-4,4',4"-triisocyanat, Polyphenyl-polymethylen-polyisocyanaten (Roh-MDI), Norbornandiisocyanaten, m- und p-Isocyanatophenylsulfonylisocyanat, perchlorierten Arylpolyisocyanaten, carbodiimidmodifizierten Polyisocyanaten, urethanmodifizierten Polyisocyanaten, allophanatmodifizierten Polyisocyanaten, isocyanuratmodifizierten Polyisocyanaten, harnstoffmodifizierten Polyisocyanaten, biurethaltigen Polyisocyanaten und isocyanatterminierten Prepolymeren auswählt.

15. Verfahren nach Anspruch 13, bei dem man das Treibmittel unter 1,1,1,3,3-Pentafluorpropan (H-FKW 245fa), 1,1,1,3,3-Pentafluorbutan (H-FKW 365mfc), 1,1,1,2-Tetrafluorethan (H-FKW 134a), Cyclopentan, Isopentan und Mischungen davon auswählt.

16. Verfahren nach Anspruch 13, bei dem das aromatische Polyesterpolyol auf Phthalsäure, Isophthalsäure, Terephthalsäure, Trimellitsäure, Dimethyl- oder Diethylestern von Phthalsäure, Dimethyl- oder Diethylestern von Isophthalsäure, Dimethyl- oder Diethylestern von Terephthalsäure, Dimethyl- oder Diethylestern von Trimellitsäure, Phthalsäureanhydrid, Tetrahydrophthalsäureanhydrid oder Pyromellitsäureanhydrid basiert.

17. Verfahren nach Anspruch 13, bei dem das aromatische Polyesterpolyol auf 1,4-Benzoldiol, 1,3-Benzoldiol (Resorcinol), Hydrochinondi(2-hydroxyethyl)ether oder Bis(hydroxyethyl)-terephthalat basiert.

18. Verfahren nach Anspruch 13, bei dem man den Füllstoff unter Glimmer, Wollastonit, Kohlefasern, Ruß, Talk, Calciumcarbonat, Bariumsulfat, Calciumsilicat, Tonen, Kieselguhr, Schlämmkreide, Flüssigkristallfasern, Aramidfasern und Glas in Form von Fasern, Schuppen, geschnittenen Fasern, Matten oder Mikrokugeln auswählt.

19. Verfahren nach Anspruch 13, bei dem der Katalysator eine oder mehrere unter Triethylamin, Tributylamin, Triethylendiamin, N-Methylmorpholin, N-Ethylmorpholin, N,N,N',N'-Tetramethylethylendiamin, Pentamethyldiethylentriamin, 1,4-Diazabicyclo[2.2.2]octan, N-Methyl-N'-(dimethylaminoethyl)piperazin, Bis(dimethylaminoalkyl)-piperazinen, N,N-Dimethylbenzylamin, N,N-Dimethylcyclohexylamin, N,N-Diethylbenzylamin, Bis(N,N-diethylaminoethyl)adipat, N,N,N',N'-Tetramethyl-1,3-butandiamin, 1,3,5-Tris(3-dimethylaminopropyl)hexahydro-S-triazin, N-(2-Hydroxypropyl)-N-trimethylammoniumformiat in Dipropylenglykol, Pentamethyldiethylentriamin (PMDETA), N,N,N'-Trimethylaminoethyl-ethanolamin, N,N-Dimethyl-β-phenylethylamin, Aminsalz von Diazabicycloundecen und Ameisensäure, 1,2-Dimethylimidazol, 2-Methylimidazol, monocyclischen und bicyclischen Amidinen, Bis(dialkylamino)alkylethern, Triethanolamin, Triisopropanolamin, N-Methyldiethanolamin, N-Ethyldiethanolamin, N,N-Dimethylethanolamin, Dioctylzinnmercaptid, Zinn(II)-acetat, Zinn(II)-octoat, Zinn(II)-ethylhexoat, Zinn(II)-laurat, Dibutylzinndilaurat, Dibutylzinndichlorid, Dibutylzinndiacetat, Dibutylzinnmaleat und Dioctylzinndiacetat, Bismutneodecanoat, Bismutversalat, Bismutcarboxylaten, Zinkneodecanoat, Zinkversalat und Zink und Bismut enthaltenden Carbonsäuresalzen ausgewählte Verbindungen umfaßt.

20. Verfahren nach Anspruch 13, bei dem man die Polyolkomponente mit dem Polyisocyanat in einem volumetrischen Verhältnis von Polyol zu Isocyanat von 1:0,9 bis 1:1,3 umsetzt.

21. Verfahren nach Anspruch 13, bei dem man die Polyolkomponente mit dem Polyisocyanat in einem volumetrischen Verhältnis von Polyol zu Isocyanat von 1:1 bis 1:1,25 umsetzt.

22. Verfahren nach Anspruch 13, bei dem man die Polyolkomponente mit dem Polyisocyanat in einem volumetrischen Verhältnis von Polyol zu Isocyanat von 1:1 umsetzt.

23. Verfahren nach Anspruch 13, bei dem es sich bei dem chlorhaltigen Verbrennungsmodifikator um Tris(1,3-dichlorisopropyl)phosphat) handelt.

24. Verfahren nach Anspruch 13, bei dem es sich bei dem bromhaltigen Verbrennungsmodifikator um einen Mischester von 3,4,5,6-Tetrabromphthalsäureanhydrid mit Diethylenglykol und Propylenglykol handelt.

## Revendications

1. Mousse de polyuréthane rigide comprenant le produit réactionnel, à un indice d'isocyanate inférieur ou égal à 160, de :
au moins un polyisocyanate ;
un composant polyol comprenant en un rapport de 1:1 à 4:1,
un polyol de polyester aromatique et
un polyol de polyéther dérivant du saccharose ; et
un composant ignifugeant comprenant,
un modificateur de combustion contenant du chlore et
un modificateur de combustion contenant du brome ;
en présence de un agent gonflant hydrocarboné ou hydrofluorocarboné,
facultativement, un ou plusieurs composants parmi l'eau, les tensioactifs, les pigments, les catalyseurs et les charges,
ladite mousse satisfaisant à un classement de classe I conformément à l'essai de la norme ASTM E-84 et contenant, sur la base du poids de la mousse, au moins 3 % en poids de chlore, de 1 % en poids à 2 % en poids de brome et moins de 1 % en poids de phosphore.

2. Mousse de polyuréthane rigide selon la revendication 1, dans laquelle l'au moins un polyisocyanate est choisi parmi le diisocyanate d'éthylène, le 1,4-diisocyanate de tétraméthylène, le 1,6-diisocyanate d'hexaméthylène, le 1,12-diisocyanate de dodécane, le 1,3-diisocyanate de cyclobutane, le 1,3- et 1,4-diisocyanate de cyclohexane, le 1-isocyanato-3,3,5-triméthyl-5-isocyanatométhylcyclohexane (diisocyanate d'isophorone), le 2,4- et 2,6-diisocyanate d'hexahydrotoluène, le 4,4'-diisocyanate de dicyclohexylméthane (MDI hydrogéné ou HMDI), le 1,3-et 1,4-diisocyanate de phénylène, le 2,4- et 2,6-diisocyanate de toluène (TDI), le 2,4'- et/ou 4,4'-diisocyanate de diphénylméthane (MDI), le diisocyanate de diphénylméthane polymère (PMDI), le 1,5-diisocyanate de naphtylène, le 4,4',4□-triisocyanate de triphénylméthane, les polyisocyanates de polyphénylpolyméthylène (MDI bruts), les diisocyanates de norbornane, les sulfonylisocyanates de m- et p-isocyanatophényle, les polyisocyanates d'aryle perchlorés, les polyisocyanates modifiés carbodiimide, les polyisocyanates modifiés uréthane, les polyisocyanates modifiés allophanate, les polyisocyanates modifiés isocyanurate, les polyisocyanates modifiés urée, les polyisocyanates contenant un groupe biuret et les prépolymères terminés par isocyanate.

3. Mousse de polyuréthane rigide selon la revendication 1, dans laquelle l'agent gonflant est choisi parmi le 1,1,1,3,3-pentafluoropropane (HFC-245fa), le 1,1,1,3,3-pentafluorobutane (HFC-365mfc), le 1,1,1,2-tétrafluoroéthane (HFC-134a), le cyclopentane, l'isopentane et les mélanges de ceux-ci.

4. Mousse de polyuréthane rigide selon la revendication 1, dans laquelle le polyol de polyester aromatique est à base d'un composé parmi l'acide phtalique, l'acide isophtalique, l'acide téréphtalique, l'acide trimellitique, les esters diméthylique ou diéthylique de l'acide phtalique, les esters diméthylique ou diéthylique de l'acide isophtalique, les esters diméthylique ou diéthylique de l'acide téréphtalique, les esters diméthylique ou diéthylique de l'acide trimellitique, l'anhydride phtalique, l'anhydride tétrahydrophtalique et l'anhydride pyromellitique.

5. Mousse de polyuréthane rigide selon la revendication 1, dans laquelle le polyol de polyester aromatique est à base d'un composé parmi le 1,4-benzènediol, le 1,3-benzènediol (résorcinol), l'oxyde d'hydroquinone et de di(2-hydroxyéthyle) et le téréphtalate de bis(hydroxyéthyle).

6. Mousse de polyuréthane rigide selon la revendication 1, dans laquelle la charge est choisie parmi le mica, la wollastonite, les fibres de carbone, le noir de carbone, le talc, le carbonate de calcium, le sulfate de baryum, le silicate de calcium, les argiles, le kieselguhr, le blanc d'Espagne, les fibres à cristaux liquides, les fibres d'aramide et le verre sous forme de fibres, de flocons, de fibres coupées, de mats ou de microsphères.

7. Mousse de polyuréthane rigide selon la revendication 1, dans laquelle le catalyseur comprend un ou plusieurs composés choisis parmi la triéthylamine, la tributylamine, la triéthylènediamine, la *N*-méthylmorpholine, la *N*-éthylmorpholine, la *N,N,N',N'*-tétraméthyléthylènediamine, la pentaméthyldiéthylènetriamine, le 1,4-diazabicyclo[2.2.2]octane, la *N*-méthyl-*N*'-(diméthylaminoéthyl)pipérazine, les bis(diméthylaminoalkyl)pipérazines, la *N,N-*diméthylbenzylamine, la *N,N*-diméthylcyclohexylamine, la *N,N*-diéthylbenzylamine, l'adipate de bis(*N,N-*diéthylaminoéthyle), la *N,N,N',N'*-tétraméthyl-1,3-butanediamine, la 1,3,5-tris(3-diméthylaminopropyl)hexahydro-s-triazine, le formiate de *N*-(2-hydroxypropyl)-*N*-triméthylammonium dans du dipropylèneglycol, la pentaméthyldiéthylènetriamine (PMDETA), la *N,N,N'*-triméthylaminoéthyléthanolamine, la *N,N*-diméthyl-β-phényléthylamine, le sel d'amine du diazabicycloundécène et de l'acide formique, le 1,2-diméthylimidazole, le 2-méthylimidazole, les amidines monocycliques et bicycliques, les éthers de bis(dialkylamino)alkyle, la triéthanolamine, la triisopropanolamine, la *N*-méthyldiéthanolamine, la *N-*éthyldiéthanolamine, la *N,N*-diméthyléthanolamine, le mercaptide de dioctylétain, l'acétate d'étain(II), l'octoate d'étain(II), l'éthylhexoate d'étain(II), le laurate d'étain(II), le dilaurate de dibutylétain, le dichlorure de dibutylétain, le diacétate de dibutylétain, le maléate de dibutylétain et le diacétate de dioctylétain, le néodécanoate de bismuth, le versalate de bismuth, les carboxylates de bismuth, le néodécanoate de zinc, le versalate de zinc et les sels d'acides carboxyliques contenant du zinc et du bismuth.

8. Mousse de polyuréthane rigide selon la revendication 1, dans laquelle le composant polyol est amené à réagir avec le polyisocyanate à un rapport en volume du polyol à l'isocyanate de 1:0,9 à 1:1,3.

9. Mousse de polyuréthane rigide selon la revendication 1, dans laquelle le composant polyol est amené à réagir avec le polyisocyanate à un rapport en volume du polyol à l'isocyanate de 1:1 à 1:1,25.

10. Mousse de polyuréthane rigide selon la revendication 1, dans laquelle le composant polyol est amené à réagir avec le polyisocyanate à un rapport en volume du polyol à l'isocyanate de 1:1.

11. Mousse de polyuréthane rigide selon la revendication 1, dans laquelle le modificateur de combustion contenant du chlore est le phosphate de tris(1,3-dichloroisopropyle).

12. Mousse de polyuréthane rigide selon la revendication 1, dans laquelle le modificateur de combustion contenant du brome est un ester mixte de l'anhydride 3,4,5,6-tétrabromophtalique avec le diéthylèneglycol et le propylèneglycol.

13. Procédé pour la production d'une mousse de polyuréthane rigide comprenant la réaction à un indice d'isocyanate inférieur ou égal à 160 de :
au moins un polyisocyanate ;
un composant polyol comprenant en un rapport de 1:1 à 4:1,
un polyol de polyester aromatique et
un polyol de polyéther dérivant de saccharose ; et
un composant ignifugeant comprenant,
un modificateur de combustion contenant du chlore et
un modificateur de combustion contenant du brome ;
en présence de un agent gonflant hydrocarboné ou hydrofluorocarboné,
facultativement, un ou plusieurs composants parmi l'eau, les tensioactifs, les pigments, les
catalyseurs et les charges,
dans lequel la mousse satisfait à un classement de classe I conformément à l'essai de la norme ASTM E-84 et contient, sur la base du poids de la mousse, au moins 3 % en poids de chlore, de 1 % en poids à 2 % en poids de brome et moins de 1 % en poids de phosphore.

14. Procédé selon la revendication 13, dans lequel l'au moins un polyisocyanate est choisi parmi le diisocyanate d'éthylène, le 1,4-diisocyanate de tétraméthylène, le 1,6-diisocyanate d'hexaméthylène, le 1,12-diisocyanate de dodécane, le 1,3-diisocyanate de cyclobutane, le 1,3- et 1,4-diisocyanate de cyclohexane, le 1-isocyanato-3,3,5-triméthyl-5-isocyanatométhylcyclohexane (diisocyanate d'isophorone), le 2,4- et 2,6-diisocyanate d'hexahydrotoluène, le 4,4'-diisocyanate de dicyclohexylméthane (MDI hydrogéné ou HMDI), le 1,3- et 1,4-diisocyanate de phénylène, le 2,4- et 2,6-diisocyanate de toluène (TDI), le 2,4'- et/ou 4,4'-diisocyanate de diphénylméthane (MDI), le diisocyanate de diphénylméthane polymère (PMDI), le 1,5-diisocyanate de naphtylène, le 4,4',4□-triisocyanate de triphénylméthane, les polyisocyanates de polyphénylpolyméthylène (MDI bruts), les diisocyanates de norbornane, les sulfonylisocyanates de m- et p-isocyanatophényle, les polyisocyanates d'aryle perchlorés, les polyisocyanates modifiés carbodiimide, les polyisocyanates modifiés uréthane, les polyisocyanates modifiés allophanate, les polyisocyanates modifiés isocyanurate, les polyisocyanates modifiés urée, les polyisocyanates contenant un groupe biuret et les prépolymères terminés par isocyanate.

15. Procédé selon la revendication 13, dans lequel l'agent gonflant est choisi parmi le 1,1,1,3,3-pentafluoropropane (HFC-245fa), le 1,1,1,3,3-pentafluorobutane (HFC-365mfc), le 1,1,1,2-tétrafluoroéthane (HFC-134a), le cyclopentane, l'isopentane et les mélanges de ceux-ci.

16. Procédé selon la revendication 13, dans lequel le polyol de polyester aromatique est à base d'un composé parmi l'acide phtalique, l'acide isophtalique, l'acide téréphtalique, l'acide trimellitique, les esters diméthylique ou diéthylique de l'acide phtalique, les esters diméthylique ou diéthylique de l'acide isophtalique, les esters diméthylique ou diéthylique de l'acide téréphtalique, les esters diméthylique ou diéthylique de l'acide trimellitique, l'anhydride phtalique, l'anhydride tétrahydrophtalique et l'anhydride pyromellitique.

17. Procédé selon la revendication 13, dans lequel le polyol de polyester aromatique est à base d'un composé parmi le 1,4-benzènediol, le 1,3-benzènediol (résorcinol), l'oxyde d'hydroquinone et de di(2-hydroxyéthyle) et le téréphtalate de bis(hydroxyéthyle).

18. Procédé selon la revendication 13, dans lequel la charge est choisie parmi le mica, la wollastonite, les fibres de carbone, le noir de carbone, le talc, le carbonate de calcium, le sulfate de baryum, le silicate de calcium, les argiles, le kieselguhr, le blanc d'Espagne, les fibres à cristaux liquides, les fibres d'aramide et le verre sous forme de fibres, de flocons, de fibres coupées, de mats ou de microsphères.

19. Procédé selon la revendication 13, dans lequel le catalyseur comprend un ou plusieurs composés choisis parmi la triéthylamine, la tributylamine, la triéthylènediamine, la N-méthylmorpholine, la *N-*éthylmorpholine, la *N,N,N',N'-*tétraméthyléthylènediamine, la pentaméthyldiéthylènetriamine, le 1,4-diazabicyclo[2.2.2]octane, la *N*-méthyl-*N*'-(diméthylaminoéthyl)pipérazine, les bis(diméthylaminoalkyl)pipérazines, la *N,N-*diméthylbenzylamine, la N,N-diméthylcyclohexylamine, la *N,N*-diéthylbenzylamine, l'adipate de bis(*N,N-*diéthylaminoéthyle), la *N,N,N',N'*-tétraméthyl-1,3-butanediamine, la 1,3,5-tris(3-diméthylaminopropyl)hexahydro-s-triazine, le formiate de *N*-(2-hydroxypropyl)-N-triméthylammonium dans du dipropylèneglycol, la pentaméthyldiéthylènetriamine (PMDETA), la *N,N,N'*-triméthylaminoéthyléthanolamine, la *N,N*-diméthyl-β-phényléthylamine, le sel d'amine du diazabicycloundécène et de l'acide formique, le 1,2-diméthylimidazole, le 2-méthylimidazole, les amidines monocycliques et bicycliques, les éthers de bis(dialkylamino)alkyle, la triéthanolamine, la triisopropanolamine, la N-méthyldiéthanolamine, la *N-*éthyldiéthanolamine, la *N,N*-diméthyléthanolamine, le mercaptide de dioctylétain, l'acétate d'étain(II), l'octoate d'étain(II), l'éthylhexoate d'étain(II), le laurate d'étain(II), le dilaurate de dibutylétain, le dichlorure de dibutylétain, le diacétate de dibutylétain, le maléate de dibutylétain et le diacétate de dioctylétain, le néodécanoate de bismuth, le versalate de bismuth, les carboxylates de bismuth, le néodécanoate de zinc, le versalate de zinc et les sels d'acides carboxyliques contenant du zinc et du bismuth.

20. Procédé selon la revendication 13, dans lequel le composant polyol est amené à réagir avec le polyisocyanate à un rapport en volume du polyol à l'isocyanate de 1:0,9 à 1:1,3.

21. Procédé selon la revendication 13, dans lequel le composant polyol est amené à réagir avec le polyisocyanate à un rapport en volume du polyol à l'isocyanate de 1:1 à 1:1,25.

22. Procédé selon la revendication 13, dans lequel le composant polyol est amené à réagir avec le polyisocyanate à un rapport en volume du polyol à l'isocyanate de 1:1.

23. Procédé selon la revendication 13, dans lequel le modificateur de combustion contenant du chlore est le phosphate de tris(1,3-dichloroisopropyle).

24. Procédé selon la revendication 13, dans lequel le modificateur de combustion contenant du brome est un ester mixte de l'anhydride 3,4,5,6-tétrabromophtalique avec le diéthylèneglycol et le propylèneglycol.
